# EUROPEAN PATENT APPLICATION

(11) **EP 4 513 610 A1**
(43) Date of publication of application: **26.02.2025**
(21) Application number: 24767327.0
(22) Date of filing: 27.02.2024
(51) Int. Cl.: H01M 10/058, H01M 10/04, H01M 10/44

(54) **FORMATION JIG AND FORMATION SYSTEM COMPRISING SAME**

(30) Priority: 07.03.2023 KR 20230029662
(71) Applicant: LG Energy Solution, Ltd., Seoul 07335 (KR)
(72) Inventor: KANG, Dong Min, Daejeon 34122 (KR)
(74) Representative: Goddar, Heinz J.
(86) International application number: PCT/KR2024/002517
(87) International publication number: WO 2024/186038

(57) **Abstract**

A formation jig according to one example of the present invention is a formation jig for performing a formation process of one or more battery cells, which comprises first and second pressurizing plates disposed to face each other at a predetermined gap so that the battery cell is inserted, and for pushing both ends of the battery cell, and a gap maintenance part provided on one pressurizing plate of the first and second pressurizing plates to maintain the gap between the first and second pressurizing plates.

## Description

### Technical Field

The present invention relates to a formation jig, and a formation system comprising the same, and more specifically, relates to a formation jig capable of improving productivity of a battery cell activation process, and a formation system comprising the same.

This application claims the benefit of priority based on Korean Patent Application No. 10-2023-0029662 dated March 7, 2023, the disclosure of which is incorporated herein by reference in its entirety.

### Background Art

In general, as the supply of portable small electrical and electronic devices is spread, development of new type secondary batteries such as nickel-metal hydride batteries and lithium secondary batteries is actively underway. The lithium secondary battery means a battery using carbon such as graphite as a negative electrode active material, a lithium containing oxide as a positive electrode material, and a non-aqueous solvent as an electrolyte.

Depending on shapes of battery cases, secondary batteries can be classified into a coin-type secondary battery, a rectangular secondary battery, a cylindrical secondary battery, and a pouch-type secondary battery, and the like.

Since the pouch-type secondary battery has advantages of simple structure, high electric capacity per unit volume, low manufacturing cost, small weight, and easy shape change, there is a tendency for the pouch-type secondary battery that an aluminum pouch is packaged in battery cells in which electrodes and separators are alternately laminated to be widely used.

Meanwhile, a formation process of manufacturing processes of pouch-type secondary batteries is a process of activating battery cells by repeating charge/discharge while pressurizing and heating the battery cells assembled through an electrode process and an assembly process. To perform such a formation process, a formation jig pressurizing the battery cells is used.

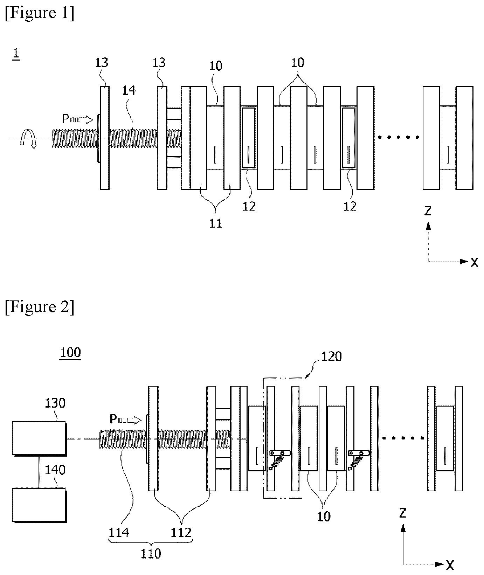

Figure 1 is a diagram for explaining a conventional formation jig.

Referring to Figure 1, the conventional formation jig (1) comprises multiple pressurizing plates (11), and the multiple pressurizing plates (11) are pressurized (P) by a screw-shaped driving shaft (14), and a plurality of driving plates (13) moved by the driving shaft (14). At this time, a pair of pressurizing plates (11) forms a space (channel) for inserting the battery cell (10) therebetween, and the battery cells (10) are each inserted into the space between two adjacent pressurizing plates (11) in a state where the pluralities of pressurizing plates are arranged in sequence.

In the orthogonal coordinate system shown in Figure 1, the X-axis may represent a direction where the pressurizing plate (11) is pressurized by the driving plate (13), and the Z-axis may represent a direction where the battery cell (10) is inserted between the pair of pressing plates (11).

The battery cell (10) is inserted between a pair of pressurizing plates (11), and then the pressurizing plate (11) is pressurized using the driving shaft (14) and the driving plate (13), and the charge and discharge of the battery cell (10) is performed. When the pressurizing plate (11) is pressurized, the gap between the pair of pressurizing plates (11) becomes smaller, and a pressure is applied to the battery cell (10) disposed between the pair of pressurizing plates (11).

Meanwhile, the plurality of battery cells (10) is transferred to the formation jig (1) by a first transfer device in a state where it is contained in a tray, and the respective battery cells (10) are each inserted into the space between two adjacent pressurizing plates (11).

Here, the first transfer device performs an operation of inserting a plurality of battery cells contained in a tray into the space between the multiple pressurizing plates (11).

At this time, the number of battery cells inserted through the first transfer device may not be the same as the number of spaces between two adjacent pressurizing plates (11). At this time, if the battery cell (10) is not inserted between the pressurizing plates (11) and an empty space is created, the pressurizing plate (11) may be damaged or the inserted battery cells (10) may not be pressurized evenly.

Accordingly, upon the formation process, a dummy cell (12) having similar size and shape as the battery cell (10) is inserted into the empty space where the battery cell (10) is not inserted between the pressurizing plates (11), and the dummy cell (12) fills the empty space between the pressurizing plates (11) where the battery cell is not inserted.

For insertion of the dummy cell (12), a sensor (not shown) is provided on the pressurizing plate (11), and the sensor is provided to sense whether the battery cell (10) has been inserted between two adjacent pressurizing plates (11).

Depending on whether the battery cell (10) is inserted or not, a control signal is transmitted to a second transfer device for transferring a dummy cell (12), and accordingly, the second transfer device performs the operation of inserting the dummy cell (12) into the empty space between the pair of pressurizing plates.

In this way, to prepare for the formation process, a time for supplying the dummy cell (12) to the empty space between the pressurizing plates (11) or removing the inserted dummy cell (12) from the space between the pressurizing plates (11) is required.

In addition, if the number of dummy cells (12) is insufficient compared to the number of empty spaces created between the multiple pressurizing plates (11), the pressurizing process does not proceed normally and must be on standby, so that there is a problem that the production process of the battery cell (10) is deteriorated.

Moreover, since the dummy cell (12) is manufactured separately to have the same shape and size as the battery cell (10), there is a disadvantage that the overall manufacturing cost for manufacturing the secondary battery increases.

In addition, since the first transfer device transferring and inserting the battery cells (10) and the second transfer device transferring and inserting the dummy cells (12) must be separately provided, there is a problem that the overall formation process equipment becomes larger.

### Disclosure

### Technical Problem

It is an object of the present invention to provide a formation jig capable of improving productivity of a battery cell formation process, and a formation system comprising the same.

### Technical Solution

In order to solve the above-described object, a formation jig related to one example of the present invention is a formation jig for performing a formation process of a battery cell, which comprises first and second pressurizing plates disposed to face each other at a predetermined gap so that the battery cell is inserted, and for pressurizing both ends of the inserted battery cell, and a gap maintenance part provided on the first pressurizing plate and provided to maintain the gap between the first and second pressurizing plates in a state where the battery cell is not inserted.

The gap maintenance part may comprise a support frame rotatably mounted on the first pressurizing plate, and an elastic member connecting the support frame and the first pressurizing plate.

Also, the support frame may be provided to rotate toward the side closer to the first pressurizing plate when one end is hinge axis-coupled to the first pressurizing plate and the other end is in contact with the battery cell that is inserted between the first and second pressurizing plates.

**In** addition, the support frame may be provided so that when it is not in contact with the battery cell, the other end is in contact with the second pressurizing plate, thereby maintaining the gap between the first and second pressurizing plates.

Furthermore, in the elastic member, one end may be connected to the first pressurizing plate and the other end may be connected to the other end of the support frame.

Also, when the battery cell and the support frame are in contact with each other as the battery cell is inserted between the first and second pressurizing plates, the elastic member may be provided to be deformed, and when the battery cell withdraws to the outside from the space between the first and second pressurizing plates, the elastic member may be provided to be restored to its original state.

In addition, when the battery cell and the support frame are in contact with each other as the battery cell is inserted between the first and second pressurizing plates, the elastic member may be provided to be compressed, and when the battery cell withdraws to the outside from the space between the first and second pressurizing plates, the elastic member may be provided to be decompressed.

Furthermore, the support frame may be provided so that the other end rotates in a first direction when it is in contact with the battery cell, and rotates in a direction opposite to the first direction when it is not in contact with the battery cell, thereby contacting the second pressurizing plate.

Also, a formation system related to another example of the present invention comprises the formation jig, and a driving part for pushing any one of the first and second pressurizing plates.

In addition, a plurality of formation jigs may be provided.

### Advantageous Effects

As discussed above, the formation jig of the present invention and the formation system comprising the same have the following effects.

A gap maintenance part is provided to keep the gap between the pair of pressurizing plates constant in a state where the battery cell is not inserted, whereby the gap between the pair of pressurizing plates in which the battery cell is not inserted can be maintained automatically by the gap maintenance part during the formation process.

Therefore, the process of inserting the dummy cell into the empty space between the pressurizing plates where a battery cell is not inserted can be omitted, so that a separate device (e.g., transfer device) for inserting the dummy cell between the pair of pressurizing plates is not necessary, and the productivity per unit time of the secondary battery can be improved.

### Description of Drawings

Figure 1 is a diagram for explaining a conventional formation jig.
Figure 2 is a diagram for explaining a formation system according to one example of the present invention.
Figure 3 is a diagram for explaining the formation jig shown in Figure 2.
Figure 4 is diagrams sequentially showing operating states of the formation jig shown in Figure 3.

### Mode for Invention

Hereinafter, a formation jig according to one example of the present invention, and a formation system comprising the same will be described in detail with reference to the attached drawings.

In addition, regardless of the reference numerals, the same or corresponding components are given by the same or similar reference numerals, duplicate descriptions thereof will be omitted, and for convenience of explanation, the size and shape of each component member as shown can be exaggerated or reduced.

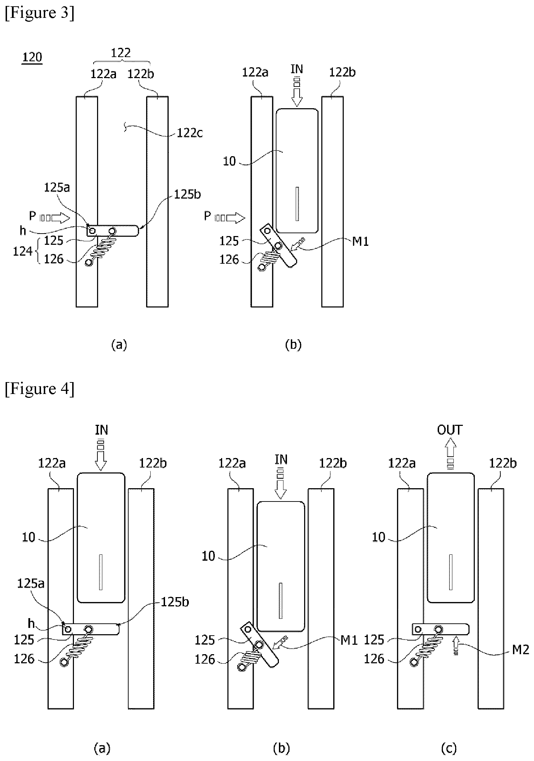

Figure 2 is a diagram for explaining a formation system according to one example of the present invention, Figure 3 is a diagram for explaining the formation jig shown in Figure 2, and Figure 4 is drawing sequentially showing operating states of the formation jig shown in Figure 3.

In the orthogonal coordinate system shown in Figures 1 and 2, the X-axis represents a direction where the pressurizing plate (122) is pressurized by the driving part (110), and the Z-axis represents a direction where the battery cell (10) is inserted between the pair of pressing plates (122) and a direction in which the battery cell (10) withdraws between the pair of pressurizing plates.

The formation jig (120) according to one example of the present invention, and the formation system (100) comprising the same may be used in a process of activating a plurality of battery cells (10), and the formation jig (120) and the formation system (100) comprising the same may be provided to perform a degassing process while activating a plurality of battery cells (10).

Referring to Figure 2, the formation system (100) according to one example of the present invention comprises a formation jig (120) and a driving part (110). In addition, the formation system (100) may comprise a control part (140) for controlling the driving part (110).

The formation system (100) comprises a formation jig (120) including a pair of pressurizing plates (122) disposed to face each other at a predetermined gap so that the battery cell (10) is inserted, and for pushing both ends of the battery cell (10), and a gap maintenance part (124) provided on any one pressurizing plate (122a, 122b) of the pair of pressurizing plates (122) to maintain the gap between the pair of pressurizing plates (122).

In addition, the formation system (100) may comprise a driving part (110) for pushing at least one pressurizing plate of the pair of pressurizing plates (122) in the formation jig (120). The driving part (110) may perform a function of pushing at least one pressurizing plate of a plurality of pressurizing plates in a predetermined direction so that the gap between two adjacent pressurizing plates becomes smaller.

As one example, the driving part (110) may comprise one or more driving plates (112) and a driving shaft (114). **In** addition, the driving part (110) may comprise a driving source (130) for rotating the driving shaft, and the driving source (130) may comprise a motor capable of rotating in forward and backward directions.

The driving plate (112) is mounted on the driving shaft (114), which may be provided to be movable along the axial direction of the driving shaft (114) depending on rotation of the driving shaft (114). As one example, when the motor rotates the driving shaft (115) in the forward direction, the driving plate (112) may move in a direction to push at least one pressurizing plate so that the gap between two adjacent pressurizing plates becomes smaller.

The driving shaft (114) is connected to the driving plate (112) and performs a function of pushing the formation jig (120) by the driving plate (112).

When the driving shaft (114) is rotated in one direction by the provided driving force, the formation jig (120) is pressurized (P) by the movement of the driving plate (112).

Alternatively, when the motor rotates the driving shaft (115) in the backward direction, the driving plate (112) may be moved in a direction away from the pressurizing plate. The rotation speed, rotation direction, and the like of the motor may be adjusted by the control part (140).

The driving plate (112) may be provided on the outermost side of the formation jig (120) to push the formation jig (120). **In** addition, the driving plates (112) may also be provided at both outermost ends of the formation jig (120), respectively.

The formation jig (120) is for performing a formation process of the battery cell (10), and the formation jig (120) comprises first and second pressurizing plates (122a, 122b) disposed to face each other at a predetermined gap so that the battery cell (10) is inserted, and for pressurizing both ends of the inserted battery cell, and a gap maintenance part (124) provided on the first pressurizing plate (122a) and provided to maintain the gap between the first and second pressurizing plates (122a, 122b) in a state where the battery cell (10) is not inserted.

The driving part (110) pushes the pressurizing plate (122) of the formation jig (120) in a predetermined direction, thereby applying a pressure (P) to the battery cell (10) inserted into the space (122c) between the pair of adjacent pressurizing plates (122).

Referring to Figures 3 and 4, as one example, the pressurizing plate located on the left of the pair of pressurizing plates (122) may be called the first pressurizing plate (122a), and the pressurizing plate located on the right may be called the second pressurizing plate (122b).

The first and second pressurizing plates (122a, 122b) are disposed on both sides of the battery cell (10), whereby the battery cell (10) is received in the space (122c) between the first and second pressurizing plates (122a, 122b), and when the driving part (110) operates, the first and second pressurizing plates (122a, 122b) perform the function of pushing both ends of the battery cell (10), respectively.

The first and second pressurizing plates (122a, 122b) may be disposed to face each other at a predetermined gap on both sides of the battery cell (10). At this time, the gap between the first and second pressurizing plates (122a, 122b) may be provided to be larger than the width of the battery cell (10).

In addition, a gap maintenance part (124) may be provided on at least one pressurizing plate of the first and second pressurizing plates (122a, 122b).

Such a gap maintenance part (124) may comprise a support frame (125) maintaining the gap between the first and second pressurizing plates (122a, 122b), and an elastic member (127) for supporting the support frame (125).

As one example, the gap maintenance part (124) may comprise a support frame (125) rotatably mounted on the first pressurizing plate (122a), and an elastic member (127) connecting the support frame (125) and the first pressurizing plate (122a).

Referring to Figure 3, the support frame (125) may be provided to rotate toward the side closer to the first pressurizing plate (122a) when one end (125a) is hinge-axis (h)-coupled to the first pressurizing plate (122a) and the other end (125b) is in contact with the battery cell (10) that is inserted between the first and second pressurizing plates (122a, 122b).

In addition, when the support frame (125) is not in contact with the battery cell (10), the other end (125b) is in contact with the second pressurizing plate (122b), whereby it may maintain the gap between the first and second pressurizing plates (122a, 122b). As one example, when the support frame (125) is not in contact with the battery cell (10), it may be mounted on the first pressurizing plate (122a) to have a 90-degree angle with the first pressurizing plate (122a).

The support frame (125) is hinge-axis (h)-coupled to the first pressurizing plate (122a) to be rotatable by the battery cell (10) inserted between the first and second pressurizing plates (122a, 122b).

The elastic member (126) may be provided to connect the first pressurizing plate (122a) and the support frame (125), and as one example, one end of the elastic member (126) may be connected to the first pressurizing plate (122a), and the other end may be connected to the other end (125b) of the support frame (125).

Referring to Figure 3(a) and Figure 3(b), when the battery cell (10) and the support frame (125) are in contact with each other as the battery cell (10) is inserted (IN) between the first and second pressurizing plates (122a, 122b), the elastic member (126) may be provided to be deformed, and when the battery cell (10) withdraws to the outside from the space (122c) between the first and second pressurizing plates, the elastic member (126) may be provided to be restored to its original state.

For example, when the battery cell (10) and the support frame (125) are in contact with each other as the battery cell (10) is inserted (IN) between the first and second pressurizing plates (122a, 122b), the elastic member (126) may be provided to be compressed, and when the battery cell (10) withdraws (OUT) to the outside, the elastic member (126) may be provided to be decompressed. In this document, the decompression may mean that the elastic member (126) is restored to its original state, and the original state may mean a state where the battery cell (10) and the support frame (125) are not in contact with each other, that is, a state where the support frame (125) and the second pressurizing plate (122) are in contact with each other, as shown in Figure 3(a).

Specifically, the support frame (125) may be provided so that the other end (125b) rotates in a first direction (M1) when it is in contact with the battery cell (10), and rotates in a second direction (M2), which is a direction opposite to the first direction (M1), when it is not in contact with the battery cell (10), thereby contacting the second pressing plate (122b).

That is, the elastic member (127) performs a function of restoring the support frame (125) rotated by the battery cell (10) inserted between the first and second pressurizing plates (122a, 122b) to its original position. As one example, the elastic member (127) may be made of a material having elasticity, such as a spring.

As shown in Figure 4(a), the support frame (125) maintains the gap between the first and second pressurizing plates (122a, 122b) in a state where the battery cell is not inserted.

During the formation process, when a pressure (P) is applied to the first and second pressurizing plates (122a, 122b) by the driving part (110), the gap between the first and second pressurizing plates (122a, 122b), into which the battery cell is not inserted, is maintained by the gap maintenance part (124). That is, without inserting the dummy cell (12, see Figure 1), it is possible to constantly maintain the gap between the first and second pressurizing plates (122a, 122b) into which the battery cell (10) is not inserted.

As shown in Figure 4(b), when the battery cell (10) is inserted between the first and second pressurizing plates (122a, 122b), the support frame (125) is rotated around the hinge axis (126) in a first direction by the inserted battery cell (10). When the support frame (125) is rotated, the elastic member (127) is compressed.

As shown in Figure 4(c), when the battery cell (10) withdraws between the first and second plates (122a, 122b) to the outside, the elastic member (127) is decompressed.

In this instance, the support frame (125) is restored to its original position by the elastic force of the elastic member (127). The support frame (125) restored to its original position maintains the gap between the first and second pressurizing plates (122a, 122b).

Also, in the formation system (100), a plurality of formation jigs (120) may be provided. That is, in a state where a plurality of formation jigs (120) is provided, it is possible to constantly maintain the gap between the first and second pressurizing plates (122a, 122b) of the formation jig, into which the battery cell (10) is not inserted, by the gap maintaining part (124).

The preferred examples of the present invention as described above have been disclosed for illustrative purposes, and those skilled in the art having ordinary knowledge of the present invention will be able to make various modifications, changes, and additions within the spirit and scope of the present invention, and such modifications, changes, and additions should be regarded as falling within the scope of the following claims.

### Industrial Applicability

According to the formation jig of the present invention and the formation system comprising the same, the gap between the pair of pressurizing plates, into which the battery cell is not inserted, can be automatically maintained during the formation process.

## Claims

1. A formation jig for performing a formation process of a battery cell, comprising:
first and second pressurizing plates disposed to face each other at a predetermined gap so that the battery cell is inserted, and for pressurizing both ends of the inserted battery cell; and
a gap maintenance part provided on the first pressurizing plate and provided to maintain the gap between the first and second pressurizing plates in a state where the battery cell is not inserted.

2. The formation jig according to claim 1, wherein
the gap maintenance part comprises a support frame rotatably mounted on the first pressurizing plate, and an elastic member connecting the support frame and the first pressurizing plate.

3. The formation jig according to claim 1, wherein
the support frame is provided to rotate toward the side closer to the first pressurizing plate when one end is hinge axis-coupled to the first pressurizing plate and the other end is in contact with the battery cell that is inserted between the first and second pressurizing plates.

4. The formation jig according to claim 3, wherein
when the support frame is not in contact with the battery cell, the other end is in contact with the second pressurizing plate, whereby it maintains the gap between the first and second pressurizing plates.

5. The formation jig according to claim 4, wherein
in the elastic member, one end is connected to the first pressurizing plate, and the other end is connected to the other end of the support frame.

6. The formation jig according to claim 5, wherein
when the battery cell and the support frame are in contact with each other as the battery cell is inserted between the first and second pressurizing plates, the elastic member is provided to be deformed, and when the battery cell withdraws to the outside from the space between the first and second pressurizing plates, the elastic member is provided to be restored to its original state.

7. The formation jig according to claim 6, wherein
when the battery cell and the support frame are in contact with each other as the battery cell is inserted between the first and second pressurizing plates, the elastic member is provided to be compressed, and when the battery cell withdraws to the outside from the space between the first and second pressurizing plates, the elastic member is provided to be decompressed.

8. The formation jig according to claim 6, wherein
the support frame is provided so that the other end rotates in a first direction when it is in contact with the battery cell, and rotates in a direction opposite to the first direction when it is not in contact with the battery cell, thereby contacting the second pressurizing plate.

9. A formation system comprising: the formation jig according to any one of claims 1 to 8; and
a driving part for pushing any one of the first and second pressurizing plates.

10. The formation system according to claim 9, wherein
a plurality of formation jigs is provided.
